# EUROPEAN PATENT SPECIFICATION

(11) **EP 3 475 559 B1**
(45) Date of publication and mention of the grant of the patent: **27.07.2022**
(21) Application number: 17733802.7
(22) Date of filing: 23.06.2017
(51) Int. Cl.: F03D 1/06

(54) **WIND TURBINE BLADE AND METHOD OF MANUFACTURING A WIND TURBINE BLADE**
WINDTURBINENSCHAUFEL UND VERFAHREN ZUR HERSTELLUNG EINER WINDTURBINENSCHAUFEL
PALE DE TURBINE ÉOLIENNE ET PROCÉDÉ DE FABRICATION D'UNE TELLE PALE

(30) Priority: 24.06.2016 EP 16176180
(43) Date of publication of application: 01.05.2019
(73) Proprietor: LM Wind Power A/S, 6000 Kolding (DK)
(72) Inventor: RAVN, Morten, 6040 Egtved (DK); HANSEN, Peter, 6000 Kolding (DK); BERG, BOJESEN, Simon, 7190 Billund (DK); SKOVBY, Casper, 4000 Roskilde (DK); DØSSING, Mads, 6000 Kolding (DK); BÆK, Peter, 6000 Kolding (DK); ANDERSEN, Christian, Frank, 6000 Kolding (DK); KLITGAARD, Michael, 5260 Odense S (DK); SLOT, Mark, Olaf, 5250 Odense SV (DK)
(74) Representative: COPA Copenhagen Patents
(86) International application number: PCT/EP2017/065570
(87) International publication number: WO 2017/220794

(56) References cited:
- WO-A1-81/00993
- WO-A1-99/43955
- AU-A1- 2010 294 625
- US-A1- 2015 151 390
- US-A1- 2015 198 141

## Description

### Technical Field

The present disclosure pertains to the field of wind turbine blades. In particular, the present disclosure relates to a wind turbine blade with desired dynamic properties and a method of manufacturing a wind turbine blade.

### Background

Wind turbine blades of fibre-reinforced polymer and in particular the aerodynamic shells of wind turbine blades are usually manufactured in moulds, where the pressure side and the suction side of the blade are manufactured separately by arranging glass fibre mats and/or other fibre-reinforcement material, such as carbon fibre, in each of the two mould parts. Then, the two halves are glued together, often by means of internal flange parts. Glue is applied to the inner face of the lower blade half before the upper blade half is lowered thereon. Additionally, one or two reinforcing profiles (beams) are often attached to the inside of the lower blade half prior to gluing to the upper blade half.

The aerodynamic shell parts are typically made by use of Vacuum Assisted Resin Transfer Moulding (VARTM), where a plurality of fibre mats are arranged on top of a rigid mould parts and possibly also a core material to provide parts having a sandwich structure. When the fibre mats have been stacked and overlapped so as to form the final shape of the wind turbine blade shell part, a flexible vacuum bag is arranged on top of the fibre mats and sealed against the rigid mould part, thereby forming a mould cavity containing the fibre mats. Resin inlets and vacuum outlets are connected to the mould cavity. First the mould cavity is evacuated via the vacuum outlets so as to form an under-pressure in the mould cavity, after which a supply of liquid resin is supplied via the resin inlets. The resin is forced into the mould cavity due to the pressure differential and impregnates the fibre material of the fibre mats. When the fibre material has been fully impregnated, the resin is cured in order to form the final composite structure, i.e. the blade shell part.

Wind turbine blades have become increasingly longer of the years and blades having a length of more than 70 metres are now commercially available on the market. This also means that the requirements to the mechanical strength of the wind turbine blade has increased dramatically. Due to the large size, it has become increasingly complicated to manufacture wind turbine blades with desired mechanical strength and in particular to provide a wind turbine blade with satisfactory dynamic properties.

US 2015/0151390 discloses wind turbine rotor blade components and an apparatus for storing, tapering, cutting and dispensing preform layers of material includes a device for storing coiled lengths of the preform layers of material and a mechanism for receiving coiled lengths of the preform layers of material.

Thus, there is a need for a wind turbine blade with improved dynamic properties.

### Summary

Accordingly, there is provided a wind turbine blade according to claim 1 comprising a profiled contour with a leading edge and a trailing edge and a chord extending between the leading edge and the trailing edge, a blade shell with a pressure side and a suction side, a first main spar cap integrated in the pressure side of the blade shell, a second main spar cap integrated in the suction side of the blade shell, and one or more shear webs connected between the pressure side and the suction side, e.g. between the first main spar cap and the second main spar cap. The blade shell comprises at least a first load carrying structure arranged at the leading edge or the trailing edge of the wind turbine blade. The first load carrying structure optionally has a first extension including a first primary extension on a first side of the chord or on a first side of a glue joint of the wind turbine blade or on a first blade shell part of the wind turbine blade. The first primary extension is at least 70 % of the first extension.

Also provided is a method of manufacturing a wind turbine blade according to claim 13 J Z comprising a profiled contour with a leading edge and a trailing edge and a chord extending between the leading edge and the trailing edge, a blade shell with a pressure side and a suction side, a first main spar cap integrated in the pressure side of the blade shell, a second main spar cap integrated in the suction side of the blade shell, and one or more shear webs connected between the first main spar cap and the second main spar cap. The method comprises arranging a first reinforcement fibre layup at the leading edge or the trailing edge, wherein the first reinforcement fibre layup has a first extension including a first primary extension on a first side of the chord or on a first blade shell part, wherein the first primary extension is at least 70 % of the first extension.

A wind turbine blade extends from a root end to a tip end along a longitudinal axis and comprises a root region, a transition region, and an airfoil region. The transition region of the wind turbine blade comprises a shoulder defining a maximum chord of the wind turbine blade.

The present disclosure advantageously relates to wind turbine blades and manufacture of wind turbine blades, e.g. having a blade length of at least 40 metres, or at least 45 metres, or even at least 50 metres. The wind turbine blade may be prebent so that, when mounted on an upwind configured horizontal wind turbine in a non-loaded state, they will curve forward out of the rotor plane so that the tip to tower clearance is increased. A wind turbine blade has a leading edge and a trailing edge with an inner surface and an outer surface. The inner surface of a wind turbine blade is a surface that is not exposed to the surroundings. The outer surface of a wind turbine blade is a surface that is exposed to the surroundings.

The wind turbine blade comprises a profiled contour with a leading edge and a trailing edge and a chord extending between the leading edge and the trailing edge. Touching points of the chord on the leading edge form a leading edge chord line and touching point of the chord on the trailing edge form a trailing edge chord line.

The wind turbine blade comprises a first main spar cap integrated in the pressure side of the blade shell and a second main spar cap integrated in the suction side of the blade shell. One or more shear webs, such as a first shear web and/or a second shear web, are connected between the first main spar cap and the second main spar cap. The wind turbine blade may comprise a first secondary spar cap integrated in the pressure side of the blade shell. The wind turbine blade may comprise a second secondary spar cap integrated in the suction side of the blade shell,

The blade shell comprises one or more load carrying structures, such as the first load carrying structure and/or a second load carrying structure. A load carrying structure, such as the first load carrying structure and/or a second load carrying structure, comprises reinforcement material, e.g. one or more layers of reinforcement material.

A layer of reinforcement material may have a first elastic modulus E1 in a first direction and a second elastic modulus E2 in a second direction perpendicular to the first direction. In one or more exemplary wind turbine blades, E1/E2 > 2.0, e.g. E1/E2 > 2.3 or E1/E2 > 2.6. In one or more advantageous wind turbine blades, E1/E2 > 3.0. The reinforcement material may comprise any type of reinforcement fibres suitable for reinforcing large composite structures, such as glass fibres, carbon fibres and/or aramid fibres. The reinforcement material or layer(s) of reinforcement material may comprise unidirectional fibres, biaxial fibres, triaxial fibres or randomly oriented fibres. In one or more advantageous wind turbine blades, a load carrying structure, such as the first load carrying structure and/or a second load carrying structure, comprises one or more unidirectional fibre layers. Unidirectional fibres or a unidirectional fibre layer may have at least 75% of the fibres (weight or volume) in one direction (± 15 degrees), such as at least 90% of the fibres in one direction (± 15 degrees).

A load carrying structure, such as the first load carrying structure and/or the second load carrying structure, may have a length of at least 5 m, such as at least 7 m. In one or more exemplary wind turbine blades, the first load carrying structure and/or the second load carrying structure has a length of at least 10 m. A load carrying structure, such as the first load carrying structure and/or the second load carrying structure, may have a length of at least 0.1 * L, wherein L is the length of the wind turbine blade. In one or more exemplary wind turbine blades, the first load carrying structure and/or the second load carrying structure, may have a length of at least 0.15 * L or at least 0.2 *L, wherein L is the length of the wind turbine blade. In one or more exemplary wind turbine blades, the first load carrying structure and/or the second load carrying structure, may have a length of at least 0.3 * L or at least 0.5 *L, wherein L is the length of the wind turbine blade.

The first load carrying structure and/or the second load carrying structure enables the blade designer to modify and tailor the dynamic behavior of the wind turbine blade.

The blade shell comprises at least a first load carrying structure arranged at the leading edge or the trailing edge.

A load carrying structure may be arranged at the leading edge when the load carrying structure at least partly extends within a distance less than 0.2 * c from the leading edge along the chord, where c is the chord length. In one or more exemplary wind turbine blades, a load carrying structure is arranged at the leading edge when the load carrying structure at least partly extends within a distance less than 0.1 * c from the leading edge along the chord, where c is the chord length.

A load carrying structure may be arranged at the trailing edge when the load carrying structure at least partly extends within a distance less than 0.3 * c from the trailing edge along the chord, where c is the chord length. In one or more exemplary wind turbine blades, a load carrying structure is arranged at the trailing edge when the load carrying structure extends within a distance less than 0.1 * c from the trailing edge along the chord, where c is the chord length.

The first load carrying structure may be asymmetric about the leading edge chord line or the trailing edge chord line. In one or more exemplary wind turbine blades, the first load carrying structure is asymmetric at the leading edge with regard to the chord or with regard to a glue joint.

Different numbers and/or distribution of reinforcement material layers on different sides of the chord or on different sides of a glue joint or on different blade shell parts may employ an asymmetric load carrying structure. Additionally, or alternatively, reinforcement material layers with varying size (extension) may provide an asymmetric load carrying structure.

The first load carrying structure, e.g. in one or more cross-sections, such as a first cross-section and/or a second cross-section, perpendicular to the longitudinal axis, has a first extension including a first primary extension on a first side of the chord or on a first side of a glue joint, such as a leading edge glue joint at the leading edge or a trailing edge glue joint at the trailing edge. The first side may be the pressure side of the wind turbine blade.

The first cross-section may be at a first distance from a root end of the wind turbine blade. The second cross-section may be at a second distance from the root end of the wind turbine blade. The first distance may be in the range from 0 to 20 m, such as 10 m. The first distance may be in the range from 0 to 0.25*L, where L is the blade length.

The second distance may be in the range from 20 m to 40 m, such as 30 m. The second distance may be larger than 0.2*L, such as in the range from 0.25*L to 0.8*L, where L is the blade length. The difference between the first distance and the second distance may be at least 2 m, such as at least 5 m.

A load carrying structure, such as the first load carrying structure and/or the second load carrying structure, may have different extensions in different cross-sections, e.g. in the first cross-section and the second cross-section. For example, the extension of a load carrying structure, such as the first load carrying structure and/or the second load carrying structure, may decrease, e.g. stepwise, from a first cross-section to a second cross-section, e.g. where the first cross-section is closer to that root end than the second cross-section.

The first primary extension may be at least 60 % of the first extension, such as at least 70% of the first extension. In one or more exemplary wind turbine blades, the first primary extension is about 80 % of the first extension or at least 80 % of the first extension. The first primary extension may constitute the first extension, i.e. be 100 % of the first extension.

The first primary extension may be in the range from 10 cm to about 200 cm, such as in the range from 50 cm to 150 cm, such as about 80 cm. In an exemplary wind turbine blade, the first primary extension is at least 50 cm, such as at least 200 cm.

The first extension of the first load carrying structure may include a first secondary extension on a second side of the chord on a second side of a glue joint, such as the leading edge glue joint or the trailing edge glue joint if present. The first secondary extension may be less than 40 % of the first extension, such as less than 30 % of the first extension. In one or more exemplary wind turbine blades, the first secondary extension is about 20 % of the first extension or less than 20 % of the first extension. In one or more exemplary wind turbine blades, the first secondary extension is larger than 5 % of the first extension.

The first secondary extension may be in the range from 10 cm to 100 cm, such as in the range from 15 cm to 50 cm. In one or more exemplary wind turbine blades, the first secondary extension is about 20 cm.

In one or more exemplary wind turbine blades, the first load carrying structure is arranged at the leading edge, the first side is the pressure side, and the first primary extension is optionally at least 80 % of the first extension.

In one or more exemplary wind turbine blades, the first load carrying structure is arranged at the trailing edge, the first side is the suction side, and the first primary extension is optionally at least 80 % of the first extension.

The first load carrying structure may, e.g. in one or more cross-sections, such as a first cross-section and/or a second cross-section, perpendicular to the longitudinal axis, comprise at least 5 layers of reinforcement material, preferably at least 10 layers of reinforcement material.

In one or more exemplary wind turbine blades, the first load carrying structure may, e.g. in the first cross-section and/or in the second cross-section, comprise at least 20 layers of reinforcement material.

The first load carrying structure may comprise N1 layers of reinforcement material on a first side of the chord or on a first side of a glue joint of the wind turbine blade or on a first blade shell part of the wind turbine blade. N1 may be in the range from 5 to 50, such as at least 10.

The first load carrying structure may comprise N2 layers of reinforcement material on a second side of the chord or on a second side of a glue joint of the wind turbine blade or on a second blade shell part of the wind turbine blade. N2 may be in the range from 1 to 50, such as at least 10. N2 may be less than N1.

The blade shell may comprise a second load carrying structure arranged at the leading edge or the trailing edge.

The second load carrying structure may be asymmetric about the leading edge chord line or the trailing edge chord line. In one or more exemplary wind turbine blades, the second load carrying structure is asymmetric at the trailing edge with regard to the chord or with regard to a glue joint.

The second load carrying structure may, e.g. in the first cross-section and/or the second cross-section, have a second extension including a second primary extension on a second side of the chord or on a second side of a glue joint, such as a leading edge glue joint at the leading edge or a trailing edge glue joint at the trailing edge. The second side may be the suction side of the wind turbine blade.

The second primary extension may be at least 60 % of the second extension, such as at least 70% of the second extension. In one or more exemplary wind turbine blades, the second primary extension is about 75 % of the second extension or at least 75 % of the second extension. The second primary extension may constitute the second extension, i.e. be 100 % of the second extension.

The second primary extension may be in the range from 10 cm to about 150 cm, such as in the range from 80 cm to 130 cm. In an exemplary wind turbine blade, the second primary extension is at least 50 cm, such as about 120 cm.

The second extension of the second load carrying structure may include a second secondary extension on a first side of the chord and/or on a first side of a glue joint, such as the leading edge glue joint or the trailing edge glue joint if present. The second secondary extension may be less than 40 % of the second extension, such as less than 30 % of the second extension. In one or more exemplary wind turbine blades, the second secondary extension is about 25 % of the second extension or less than 25 % of the second extension. In one or more exemplary wind turbine blades, the second secondary extension is larger than 5 % of the second extension.

The second secondary extension may be in the range from 10 cm to about 100 cm, such as in the range from 20 cm to 60 cm. In an exemplary wind turbine blade, the second secondary extension is about 40 cm.

In one or more exemplary wind turbine blades, the second load carrying structure is arranged at the trailing edge, the second side is the suction side, and the second primary extension is optionally at least 80 % of the first extension.

The second load carrying structure may, e.g. in the first cross-section and/or the second cross-section, comprise at least 5 layers of reinforcement material, preferably at least 10 layers of reinforcement material.

In one or more exemplary wind turbine blades, the second load carrying structure may, e.g. in the first cross-section and/or in the second cross-section, comprise at least 20 layers of reinforcement material.

The second load carrying structure may comprise M1 layers of reinforcement material on a second side of the chord or on a second side of a glue joint of the wind turbine blade or on a second blade shell part of the wind turbine blade. M1 may be in the range from 5 to 50, such as at least 10.

The second load carrying structure may comprise M2 layers of reinforcement material on a first side of the chord or on a first side of a glue joint of the wind turbine blade or on a first blade shell part of the wind turbine blade. M2 may be in the range from 1 to 50, such as at least 10. M2 may be less than M1.

An extension may be measured perpendicular to the longitudinal direction of the wind turbine blade. An extension may be measured as the mean extension of different layers of a load carrying structure or a weighted sum of the extension of different layers.

The first load carrying structure and/or the second load carrying structure may be integrated in the blade shell.

The wind turbine blade may comprise a first blade shell part and a second blade shell part. The first blade shell part and the second blade shell part may be joined along one or more glue joints, such as a leading edge joint and a trailing edge glue joint. The first load carrying structure may be arranged in the first blade shell part. In one or more exemplary wind turbine blades, the first primary extension is in the first blade shell part and the first secondary extension is in the second blade shell part. In one or more exemplary wind turbine blades, the first extension is in the first blade shell part The second load carrying structure may be arranged in the second blade shell part. In one or more exemplary wind turbine blades, the second primary extension is in the second blade shell part and the second secondary extension is in the first blade shell part. In one or more exemplary wind turbine blades, the second extension is in the second blade shell part.

The disclosed method comprises arranging a first reinforcement fibre layup at the leading edge or the trailing edge. Arranging a first reinforcement fibre layup may comprise or consist of arranging a first primary reinforcement fibre layup at the leading edge of a first blade shell part. A reinforcement fibre layup may comprise a plurality of reinforcement material layers such as at least 10 layers, e.g. in a first cross-section and/or in a second cross-section.

Arranging a first reinforcement fibre layup may comprise or consist of arranging a first primary reinforcement fibre layup at the trailing edge of a second blade shell part of the wind turbine blade.

The method may comprise arranging a first reinforcement fibre layup at the leading edge or the trailing edge. Arranging a first reinforcement fibre layup may comprise or consist of arranging a first primary reinforcement fibre layup at the leading edge of a first blade shell part. Arranging a first reinforcement fibre layup may comprise arranging a first secondary reinforcement fibre layup at the leading edge of a second blade shell part.

The first primary extension, i.e. the extension of first primary reinforcement fibre layup, may be on a first blade shell part of the wind turbine. The first extension may comprise a first secondary extension on a second blade shell part of the wind turbine blade.

The method may comprise arranging a second reinforcement fibre layup at the trailing edge, wherein the second reinforcement fibre layup has a second extension including a second primary extension on a second side of the chord, wherein the second primary extension is at least 60 % of the second extension.

The method optionally comprises supplying resin to the first and/or second reinforcement fibre layup and curing the resin to form a first blade shell part and/or a second blade shell part.

The method may comprise joining first and second blade shell parts of the wind turbine blade. The method may be a method of manufacturing a wind turbine blade as described herein.

### Detailed Description

The invention is explained in detail below with reference to the drawings, in which
Fig. 1 shows a wind turbine,
Fig. 2 shows a schematic view of a wind turbine blade,
Fig. 3 shows a schematic view of an airfoil profile,
Fig. 4 shows a schematic view of a wind turbine blade, seen from above and from the side,
Fig. 5 shows a cross-sectional view of a wind turbine blade according to the invention, and
Fig. 6 shows a cross-sectional view of a wind turbine blade according to the invention.

The present invention relates to manufacture of blade shell parts of wind turbine blades for horizontal axis wind turbines (HAWTs).

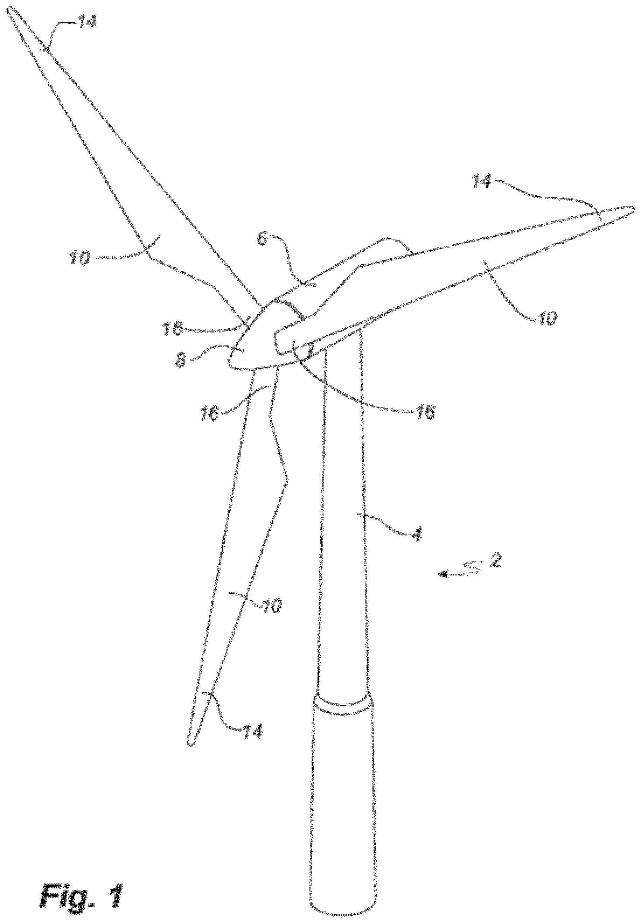

Fig. 1 illustrates a conventional modern upwind wind turbine according to the so-called "Danish concept" with a tower 4, a nacelle 6 and a rotor with a substantially horizontal rotor shaft. The rotor includes a hub 8 and three wind turbine blades 10 extending radially from the hub 8, each having a blade root 16 nearest the hub and a blade tip 14 furthest from the hub 8. The rotor has a radius denoted R.

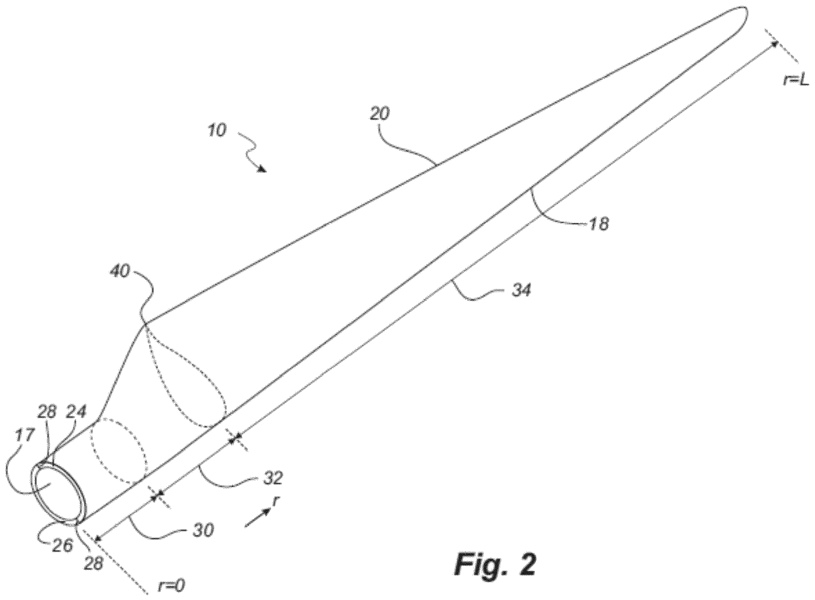

Fig. 2 shows a schematic view of an exemplary wind turbine blade 10. The wind turbine blade 10 has the shape of a conventional wind turbine blade with a root end and a tip end and comprises a root region 30 closest to the hub, a profiled or an airfoil region 34 furthest away from the hub and a transition region 32 between the root region 30 and the airfoil region 34. The blade 10 comprises a leading edge 18 facing the direction of rotation of the blade 10, when the blade is mounted on the hub, and a trailing edge 20 facing the opposite direction of the leading edge 18.

The airfoil region 34 (also called the profiled region) has an ideal or almost ideal blade shape with respect to generating lift, whereas the root region 30 due to structural considerations has a substantially circular or elliptical cross-section, which for instance makes it easier and safer to mount the blade 10 to the hub. The diameter (or the chord) of the root region 30 may be constant along the entire root area 30. The transition region 32 has a transitional profile gradually changing from the circular or elliptical shape of the root region 30 to the airfoil profile of the airfoil region 34. The chord length of the transition region 32 typically increases with increasing distance *r* from the hub. The airfoil region 34 has an airfoil profile with a chord extending between the leading edge 18 and the trailing edge 20 of the blade 10. The width of the chord decreases with increasing distance *r* from the hub.

A shoulder 40 of the blade 10 is defined as the position, where the blade 10 has its largest chord length. The shoulder 40 is typically provided at the boundary between the transition region 32 and the airfoil region 34.

It should be noted that the chords of different sections of the blade normally do not lie in a common plane, since the blade may be twisted and/or curved (i.e. pre-bent), thus providing the chord plane with a correspondingly twisted and/or curved course, this being most often the case in order to compensate for the local velocity of the blade being dependent on the radius from the hub.

The wind turbine blade 10 comprises a shell comprising two blade shell parts made of fibre-reinforced polymer and is typically made as a pressure side or upwind blade shell part 24 and a suction side or downwind blade shell part 26 that are glued together along bond lines 28 extending along the trailing edge 20 and the leading edge 18 of the blade 10. Typically, the root ends of the blade shell parts 24, 26 has a semi-circular or semi-oval outer cross-sectional shape.

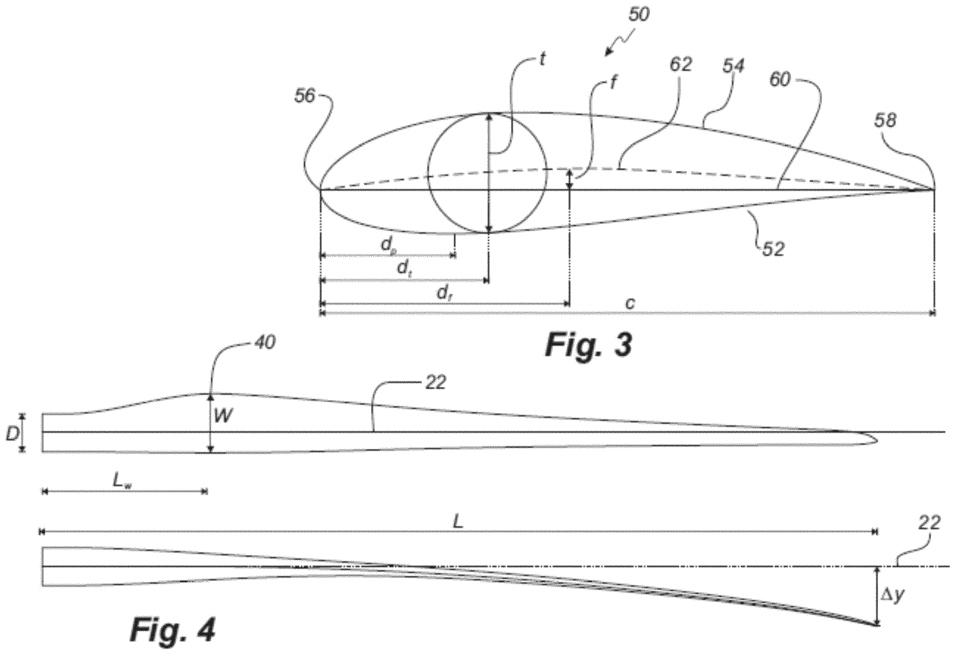

Figs. 3 and 4 depict parameters, which may be used to explain the geometry of blade shell parts to be manufactured according to the invention.

Fig. 3 shows a schematic view of an airfoil profile 50 of a typical blade of a wind turbine depicted with the various parameters, which are typically used to define the geometrical shape of an airfoil. The airfoil profile 50 has a pressure side 52 and a suction side 54, which during use - i.e. during rotation of the rotor - normally face towards the windward (or upwind) side and the leeward (or downwind) side, respectively. The airfoil 50 has a chord 60 with a chord length c extending between a leading edge 56 and a trailing edge 58 of the blade. The airfoil 50 has a thickness t, which is defined as the distance between the pressure side 52 and the suction side 54. The thickness t of the airfoil varies along the chord 60. The deviation from a symmetrical profile is given by a camber line 62, which is a median line through the airfoil profile 50. The median line can be found by drawing inscribed circles from the leading edge 56 to the trailing edge 58. The median line follows the centres of these inscribed circles and the deviation or distance from the chord 60 is called the camber f. The asymmetry can also be defined by use of parameters called the upper camber (or suction side camber) and lower camber (or pressure side camber), which are defined as the distances from the chord 60 and the suction side 54 and pressure side 52, respectively.

Airfoil profiles are often characterised by the following parameters: the chord length c, the maximum camber f, the position *d_{f}* of the maximum camber *f,* the maximum airfoil thickness t, which is the largest diameter of the inscribed circles along the median camber line 62, the position *dₜ* of the maximum thickness *t,* and a nose radius (not shown). These parameters are typically defined as ratios to the chord length c. Thus, a local relative blade thickness *t*/*c* is given as the ratio between the local maximum thickness *t* and the local chord length c. Further, the position *dₚ* of the maximum pressure side camber may be used as a design parameter, and of course also the position of the maximum suction side camber.

Fig. 4 shows other geometric parameters of the blade and blade shell parts. The blade and blade shell parts have a total blade length L. As shown in Fig. 3, the root end is located at position *r =* 0, and the tip end located at *r =* L. The shoulder 40 of the blade shell parts is located at a position *r = L_{w},* and has a shoulder width W, which equals the chord length at the shoulder 40. The diameter of the root is defined as X. Further, the blade/blade shell parts is/are provided with a prebend, which is defined as *Δy,* which corresponds to the out of plane deflection from a pitch axis 22 of the blade.

Wind turbine blades have over the time become longer and longer and may now exceed a length of 70 metres. Further, the root diameter of blades has increased. The length of the blade, the root diameter as well as the shape of the blades with respect to shoulder, twist and prebending makes it increasingly difficult to provide wind turbine blades with sufficient and desired mechanical strength and dynamic properties.

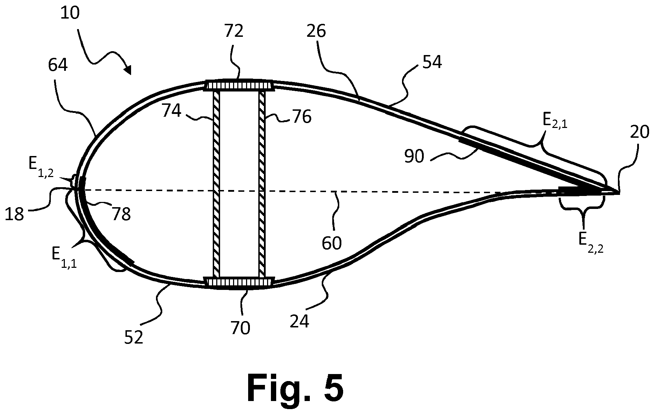

Fig. 5 is an exemplary first cross-section perpendicular to the longitudinal axis X of a wind turbine blade according to the present invention at a first distance from the root end of the wind turbine blade. The wind turbine blade 10 comprises a profiled contour with a leading edge 18 and a trailing edge 20 and a chord 60 extending between the leading edge 18 and the trailing edge 20, a blade shell 64 with a pressure side 52 and a suction side 54, a first main spar cap 70 integrated in the pressure side of the blade shell 64, and a second main spar cap 72 integrated in the suction side of the blade shell 64. Further, the wind turbine blade 10 comprises one or more shear webs including a first shear web 74 and optionally a second shear web 76, the shear web(s) being connected between the first main spar cap 70 and the second main spar cap 72.

The blade shell 64 comprises a first load carrying structure 78 arranged at the leading edge 18, wherein the first load carrying structure has a first extension including a first primary extension E_{1,1} on a first side (pressure side 52) of the chord 60. The first primary extension is at least 60 % of the first extension (E_{1,1} + E_{1,2}). The first load carrying structure comprises 20 layers of reinforcement material.

Further, the blade shell 64 optionally comprises a second load carrying structure 90 arranged at the trailing edge 20, wherein the second load carrying structure has a second extension including a second primary extension E_{2,1} on a second side (suction side 54) of the chord 60. The second primary extension is at least 60 % of the second extension (E_{2,1} + E_{2,2}). The second load carrying structure 90 comprises 20 layers of reinforcement material.

The first load carrying structure and optionally the second load carrying structure is/are designed to tailor the dynamic properties of the wind turbine blade, e.g. in order to improve the edgewise damping of the wind turbine blade.

Blade parameters for exemplary wind turbine blades B1, ... B6 in a first cross section at a first distance and/or a second cross section at a second distance from the root end are set out in Table 1, wherein E_{1,1} is the first primary extension and E₁ is the first extension of a first load carrying structure. E_{2,1} is the second primary extension and E₂ is the second extension of a second load carrying structure. N1 is the number of reinforcement material layers for the first load carrying structure on a first side of the chord or on a first side of a glue joint of the wind turbine blade or on a first blade shell part of the wind turbine blade. N2 is the number of reinforcement material layers for the first load carrying structure on a second side of the chord or on a second side of a glue joint of the wind turbine blade or on a second blade shell part of the wind turbine blade. M1 is the number of reinforcement material layers for the second load carrying structure on a second side of the chord or on a second side of a glue joint of the wind turbine blade or on a second blade shell part of the wind turbine blade. M2 is the number of reinforcement material layers for the second load carrying structure on a first side of the chord or on a first side of a glue joint of the wind turbine blade or on a first blade shell part of the wind turbine blade. The different blade parameter values for different exemplary wind turbine blades may be taken alone, i.e. define a common parameter for a set of wind turbine blades according to the invention, or combined, e.g. E_{1,1}/E₁ for B1 may be combined with N1 of B4 as another exemplary wind turbine blade according to the invention. Further, blade parameter values for a wind turbine blade, such as B1, may be indicative for a first cross section of an exemplary wind turbine blade, and blade parameter values for another wind turbine blade, such as B5, may be indicative for a second cross section of the exemplary wind turbine blade.

**Table 1: Blade parameters for exemplary wind turbine blades in first cross-sections.**

| | B1 | B2 | B3 | B4 | B5 | B6 |
|---|---|---|---|---|---|---|
| E_{1,1}/E₁ | >60% | 45%-70% | >70% | >70% | >80% | 80% |
| E_{2,1}/E₂ | >60% | | >70% | | >70% | 75% |
| N1 | >10 | >N2 | | 10 | <N2 | >20 |
| N2 | >5 | <N1 | | 10 | >N1 | >10 |
| M1 | >10 | | | | | >20 |
| M2 | >5 | | | | | >10 |

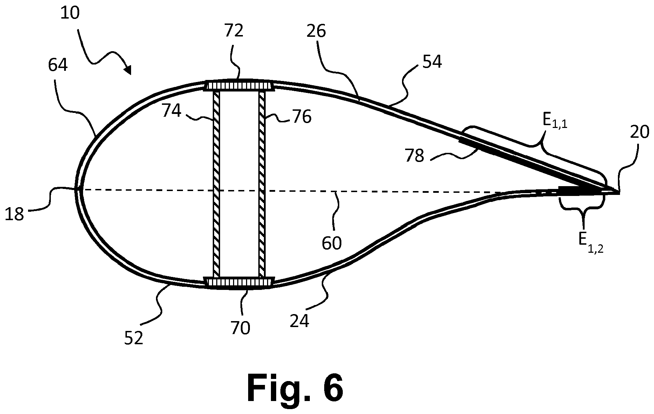

Fig. 6 is an exemplary first cross-section perpendicular to the longitudinal axis X of a wind turbine blade according to the present invention at a first distance from the root end of the wind turbine blade. The wind turbine blade 10 comprises a profiled contour with a leading edge 18 and a trailing edge 20 and a chord 60 extending between the leading edge 18 and the trailing edge 20, a blade shell 64 with a pressure side 52 and a suction side 54, a first main spar cap 70 integrated in the pressure side of the blade shell 64, and a second main spar cap 72 integrated in the suction side of the blade shell 64. Further, the wind turbine blade 10 comprises one or more shear webs including a first shear web 74 and optionally a second shear web 76, the shear web(s) being connected between the first main spar cap 70 and the second main spar cap 72.

The blade shell 64 comprises a first load carrying structure 78 arranged at the trailing edge 20, wherein the first load carrying structure has a first extension including a first primary extension E_{1,1} on a first side (suction side 54) of the chord 60. The first primary extension is at least 60 % of the first extension (E_{1,1} + E_{1,2}). The first load carrying structure comprises 20 layers of reinforcement material.

The first load carrying structure and optionally the second load carrying structure is/are designed to tailor the dynamic properties, e.g. edgewise damping, of the wind turbine blade, e.g. in order to improve or obtain a desired edgewise damping of the wind turbine blade.

The invention has been described with reference to preferred embodiments. However, the scope of the invention is not limited to the illustrated embodiments, and alterations and modifications can be carried out without deviating from the scope of the invention that is defined by the following claims. The invention is not limited to the embodiments described herein, and may be modified or adapted without departing from the scope of the present invention.

### List of references

- 2: wind turbine
- 4: tower
- 6: nacelle
- 8: hub
- 10: wind turbine blade
- 14: blade tip
- 15: tip end section
- 16: blade root
- 17: root end face
- 18: leading edge
- 20: trailing edge
- 22: pitch axis
- 24: pressure side blade shell part / first or upwind blade shell part
- 26: suction side blade shell part / second or downwind blade shell part
- 28: bond lines
- 29: horizontal
- 30: root region
- 32: transition region
- 34: airfoil region
- 50: airfoil profile
- 52: pressure side / upwind side
- 54: suction side / downwind side
- 56: leading edge
- 58: trailing edge
- 60: chord
- 62: camber line / median line
- 64: blade shell
- 70: first main spar cap
- 72: second main spar cap
- 74: first shear web
- 76: second shear web
- 78: first load carrying structure
- 90: second load carrying structure
- c: chord length
- *dₜ*: position of maximum thickness
- *d_{f}*: position of maximum camber
- *dₚ*: position of maximum pressure side camber
- *f*: camber
- *l_{f}*: longitudinal distance between root end frames
- *lₒ*: longitudinal extent of blade tip overhang
- *L*: blade length
- *r*: local radius, radial distance from blade root
- *t*: thickness
- D: blade root diameter
- Δ*y*: prebend
- X: longitudinal axis
- E_{1,1}: first primary extension of first load carrying structure
- E_{1,2}: first secondary extension of first load carrying structure
- E_{2,1}: second primary extension of second load carrying structure
- E_{2,2}: second secondary extension of second load carrying structure

## Claims

1. A wind turbine blade (10) comprising
- a profiled contour with a leading edge (56) and a trailing edge (58) and a chord (60) extending between the leading edge and the trailing edge,
- a blade shell (64) with a pressure side and a suction side,
- a first main spar cap (70) integrated in the pressure side of the blade shell,
- a second main spar cap (72) integrated in the suction side of the blade shell, and
- one or more shear webs (74, 76) connected between the first main spar cap and the second main spar cap,
wherein the blade shell comprises at least a first load carrying structure (78) comprising one or more unidirectional fibre layers and being arranged at the leading edge, wherein the first load carrying structure has a first extension including a first primary extension (E_{1,1}) on a first side of the chord, **characterized in that** the first primary extension is at least 70 % of the first extension.

2. Wind turbine blade according to claim 1, wherein the first load carrying structure is designed to tailor the edgewise damping of the wind turbine blade.

3. Wind turbine blade according to any of claims 1-2, wherein the first extension of the first load carrying structure includes a first secondary extension (E_{1,2}) on a second side of the chord, wherein the first secondary extension is less than 20 % of the first extension.

4. Wind turbine blade according to any of the preceding claims, wherein the first load carrying structure is arranged at the leading edge, wherein the first side of the chord is the pressure side, and wherein the first primary extension is at least 80 % of the first extension.

5. Wind turbine blade according to any of the preceding claims, wherein the first load carrying structure comprises at least 10 layers of reinforcement material.

6. Wind turbine blade according to any of the preceding claims, wherein the blade shell comprises a second load carrying structure (90) arranged at the trailing edge, wherein the second load carrying structure has a second extension including a second primary extension (E_{2,1}) on a second side of the chord, wherein the second primary extension is at least 60 % of the second extension.

7. Wind turbine blade according to claim 6, wherein the second extension of the second load carrying structure includes a second secondary extension (E_{2,2}) on the first side of the chord, wherein the second secondary extension is less than 25 % of the second extension.

8. Wind turbine blade according to any of claims 6-7, wherein the second load carrying structure is arranged at the trailing edge, wherein the second side of the chord is the suction side, and wherein the second primary extension is at least 80 % of the second extension.

9. Wind turbine blade according to any of claims 6-8, wherein the second load carrying structure comprises at least 10 layers of reinforcement material.

10. Wind turbine blade according to any of the preceding claims, wherein the first load carrying structure is asymmetric at the leading edge with regard to the chord.

11. Wind turbine blade according to any of the preceding claims, wherein the wind turbine blade comprises a first blade shell part and a second blade shell part, wherein the first load carrying structure is arranged in the first blade shell part.

12. Wind turbine blade according to claim 11 as dependent on claim 6, wherein the second load carrying structure is arranged in the second blade shell part.

13. A method of manufacturing a wind turbine blade (10) comprising a profiled contour with a leading edge (56) and a trailing edge (58) and a chord (60) extending between the leading edge and the trailing edge, a blade shell (64) with a pressure side and a suction side, a first main spar cap (70) integrated in the pressure side of the blade shell, a second main spar cap (72) integrated in the suction side of the blade shell, and one or more shear webs (74, 76) connected between the first main spar cap and the second main spar cap, the method comprising
- arranging a first reinforcement fibre layup at the leading edge, wherein the first reinforcement fibre layup has a first extension including a first primary extension (E_{1,1}) on a first side of the chord, **characterized in that** the first primary extension is at least 70 % of the first extension.

14. Method according to claim 13, wherein the method comprises arranging a second reinforcement fibre layup at the trailing edge, wherein the second reinforcement fibre layup has a second extension including a second primary extension on a second side of the chord, wherein the second primary extension is at least 60 % of the second extension.

15. Method according to any of claims 13-14, wherein the method comprises supplying resin to the first and/or second reinforcement fibre layup and curing the resin to form a first blade shell part and/or a second blade shell part.

16. Method according to any of claims 13-15, wherein the method comprises joining first and second blade shell parts of the wind turbine blade.

## Patentansprüche

1. Windkraftanlagenflügel (10), der Folgendes umfasst:
- eine Profilkontur mit einer Eintrittskante (56) und einer Austrittskante (58) und einer sich zwischen der Eintrittskante und der Austrittskante erstreckenden Sehne (60),
- eine Flügelschale (64) mit einer Druckseite und einer Saugseite,
- eine erste Hauptholmkappe (70), die in die Druckseite der Flügelschale integriert ist,
- eine zweite Hauptholmkappe (72), die in die Saugseite der Flügelschale integriert ist, und
- einen oder mehrere Scherstege (74, 76), die zwischen der ersten Hauptholmkappe und der zweiten Hauptholmkappe angeschlossen sind,
wobei die Flügelschale mindestens eine erste lasttragende Struktur (78) umfasst, die eine oder mehrere unidirektionale Faserschichten umfasst und an der Eintrittskante angeordnet ist, wobei die erste lasttragende Struktur ein erstes Ausmaß aufweist, das ein erstes Primärausmaß (E_{1,1}) auf einer ersten Seite der Sehne umfasst, **dadurch gekennzeichnet, dass** das erste Primärausmaß mindestens 70 % des ersten Ausmaßes beträgt.

2. Windkraftanlagenflügel nach Anspruch 1, wobei die erste lasttragende Struktur dazu ausgelegt ist, die seitliche Dämpfung des Windkraftanlagenflügels anzupassen.

3. Windkraftanlagenflügel nach einem der Ansprüche 1-2, wobei das erste Ausmaß der ersten lasttragenden Struktur ein erstes Sekundärausmaß (E_{1,2}) auf einer zweiten Seite der Sehne umfasst, wobei das erste Sekundärausmaß weniger als 20 % des ersten Ausmaßes beträgt.

4. Windkraftanlagenflügel nach einem der vorangehenden Ansprüche, wobei die erste lasttragende Struktur an der Eintrittskante angeordnet ist, wobei die erste Seite der Sehne die Druckseite ist und wobei das erste Primärausmaß mindestens 80 % des ersten Ausmaßes beträgt.

5. Windkraftanlagenflügel nach einem der vorangehenden Ansprüche, wobei die erste lasttragende Struktur mindestens 10 Schichten aus Verstärkungsmaterial umfasst.

6. Windkraftanlagenflügel nach einem der vorangehenden Ansprüche, wobei die Flügelschale eine zweite lasttragende Struktur (90) umfasst, die an der Austrittskante angeordnet ist, wobei die zweite lasttragende Struktur ein zweites Ausmaß aufweist, das ein zweites Primärausmaß (E_{2,1}) auf einer zweiten Seite der Sehne umfasst, wobei das zweite Primärausmaß mindestens 60 % des zweiten Ausmaßes beträgt.

7. Windkraftanlagenflügel nach Anspruch 6, wobei das zweite Ausmaß der zweiten lasttragenden Struktur ein zweites Sekundärausmaß (E_{2,2}) auf der ersten Seite der Sehne umfasst, wobei das zweite Sekundärausmaß weniger als 25 % des zweiten Ausmaßes beträgt.

8. Windkraftanlagenflügel nach einem der Ansprüche 6-7, wobei die zweite lasttragende Struktur an der Austrittskante angeordnet ist, wobei die zweite Seite der Sehne die Saugseite ist und wobei das zweite Primärausmaß mindestens 80 % des zweiten Ausmaßes beträgt.

9. Windkraftanlagenflügel nach einem der Ansprüche 6-8, wobei die zweite lasttragende Struktur mindestens 10 Schichten aus Verstärkungsmaterial umfasst.

10. Windkraftanlagenflügel nach einem der vorangehenden Ansprüche, wobei die erste lasttragende Struktur an der Eintrittskante bezogen auf die Sehne asymmetrisch ist.

11. Windkraftanlagenflügel nach einem der vorangehenden Ansprüche, wobei der Windkraftanlagenflügel einen ersten Flügelschalenteil und einen zweiten Flügelschalenteil umfasst, wobei die erste lasttragende Struktur in dem ersten Flügelschalenteil angeordnet ist.

12. Windkraftanlagenflügel nach Anspruch 11, wenn abhängig von Anspruch 6, wobei die zweite lasttragende Struktur in dem zweiten Flügelschalenteil angeordnet ist.

13. Verfahren zum Herstellen eines Windkraftanlagenflügels (10), der Folgendes umfasst: eine Profilkontur mit einer Eintrittskante (56) und einer Austrittskante (58) und einer sich zwischen der Eintrittskante und der Austrittskante erstreckenden Sehne (60), eine Flügelschale (64) mit einer Druckseite und einer Saugseite, eine erste Hauptholmkappe (70), die in die Druckseite der Flügelschale integriert ist, eine zweite Hauptholmkappe (72), die in die Saugseite der Flügelschale integriert ist, und einen oder mehrere Scherstege (74, 76), die zwischen der ersten Hauptholmkappe und der zweiten Hauptholmkappe angeschlossen sind, wobei das Verfahren Folgendes umfasst:
- Anordnen einer ersten Verstärkungsfaserschichtung an der Eintrittskante, wobei die erste Verstärkungsfaserschichtung ein erstes Ausmaß aufweist, das ein erstes Primärausmaß (E_{1,1})auf einer ersten Seite der Sehne umfasst, **dadurch gekennzeichnet, dass** das erste Primärausmaß mindestens 70 % des ersten Ausmaßes beträgt.

14. Verfahren nach Anspruch 13, wobei das Verfahren das Anordnen einer zweiten Verstärkungsfaserschichtung an der Austrittskante umfasst, wobei die zweite Verstärkungsfaserschichtung ein zweites Ausmaß aufweist, das ein zweites Primärausmaß auf einer zweiten Seite der Sehne umfasst, wobei das zweite Primärausmaß mindestens 60 % des zweiten Ausmaßes beträgt.

15. Verfahren nach einem der Ansprüche 13-14, wobei das Verfahren das Zuführen von Harz zu der ersten und/oder der zweiten Verstärkungsfaserschichtung und das Aushärten des Harzes, um einen ersten Flügelschalenteil und/oder einen zweiten Flügelschalenteil zu bilden, umfasst.

16. Verfahren nach einem der Ansprüche 13-15, wobei das Verfahren das Verbinden des ersten und des zweiten Flügelschalenteils des Windkraftanlagenflügels umfasst.

## Revendications

1. Pale d'éolienne (10) comportant
- un contour profilé avec un bord d'attaque (56) et un bord de fuite (58) et une corde (60) s'étendant entre le bord d'attaque et le bord de fuite,
- une coque de pale (64) avec un côté en pression et un côté en dépression,
- une première semelle de longeron principale (70) intégrée dans le côté en pression de la coque de pale,
- une deuxième semelle de longeron principale (72) intégrée dans le côté en dépression de la coque de pale, et
- une ou plusieurs âmes de cisaillement (74, 76) raccordées entre la première semelle de longeron principale et la deuxième semelle de longeron principale,
dans laquelle la coque de pale comporte au moins une première structure porteuse de charge (78) comportant une ou plusieurs couches de fibres unidirectionnelles et étant agencée au niveau du bord d'attaque, dans laquelle la première structure porteuse de charge a une première extension comprenant une première extension primaire (E_{1,1})sur un premier côté de la corde, **caractérisée en ce que** la première extension primaire représente au moins 70 % de la première extension.

2. Pale d'éolienne selon la revendication 1, dans laquelle la première structure porteuse de charge est conçue pour s'adapter à l'amortissement dans le sens de la tranche de la pale d'éolienne.

3. Pale d'éolienne selon l'une quelconque des revendications 1 et 2, dans laquelle la première extension de la première structure porteuse de charge comprend une première extension secondaire (E_{1,2}) sur un deuxième côté de la corde, dans laquelle la première extension secondaire représente moins de 20 % de la première extension.

4. Pale d'éolienne selon l'une quelconque des revendications précédentes, dans laquelle la première structure porteuse de charge est agencée au niveau du bord d'attaque, dans laquelle le premier côté de la corde est le côté en pression, et dans laquelle la première extension primaire représente au moins 80 % de la première extension.

5. Pale d'éolienne selon l'une quelconque des revendications précédentes, dans laquelle la première structure porteuse de charge comporte au moins 10 couches de matériau de renfort.

6. Pale d'éolienne selon l'une quelconque des revendications précédentes, dans laquelle la coque de pale comporte une deuxième structure porteuse de charge (90) agencée au niveau du bord de fuite, dans laquelle la deuxième structure porteuse de charge a une deuxième extension comprenant une deuxième extension primaire (E_{2,1}) sur un deuxième côté de la corde, dans laquelle la deuxième extension primaire représente au moins 60 % de la deuxième extension.

7. Pale d'éolienne selon la revendication 6, dans laquelle la deuxième extension de la deuxième structure porteuse de charge comprend une deuxième extension secondaire (E_{2,2}) sur le premier côté de la corde, dans laquelle la deuxième extension secondaire représente moins de 25 % de la deuxième extension.

8. Pale d'éolienne selon l'une quelconque des revendications 6 et 7, dans laquelle la deuxième structure porteuse de charge est agencée au niveau du bord de fuite, dans laquelle le deuxième côté de la corde est le côté en dépression, et dans laquelle la deuxième extension primaire représente au moins 80 % de la deuxième extension.

9. Pale d'éolienne selon l'une quelconque des revendications 6 à 8, dans laquelle la deuxième structure porteuse de charge comporte au moins 10 couches de matériau de renfort.

10. Pale d'éolienne selon l'une quelconque des revendications précédentes, dans laquelle la première structure porteuse de charge est asymétrique au niveau du bord d'attaque par rapport à la corde.

11. Pale d'éolienne selon l'une quelconque des revendications précédentes, dans laquelle la pale d'éolienne comporte une première partie formant coque de pale et une deuxième partie formant coque de pale, dans laquelle la première structure porteuse de charge est agencée dans la première partie formant coque de pale.

12. Pale d'éolienne selon la revendication 11, dépendante de la revendication 6, dans laquelle la deuxième structure porteuse de charge est agencée dans la deuxième partie formant coque de pale.

13. Procédé de fabrication d'une pale d'éolienne (10) comportant un contour profilé avec un bord d'attaque (56) et un bord de fuite (58) et une corde (60) s'étendant entre le bord d'attaque et le bord de fuite, une coque de pale (64) avec un côté en pression et un côté en dépression, une première semelle de longeron principale (70) intégrée dans le côté en pression de la coque de pale, une deuxième semelle de longeron principale (72) intégrée dans le côté en dépression de la coque de pale, et une ou plusieurs âmes de cisaillement (74, 76) raccordées entre la première semelle de longeron principale et la deuxième semelle de longeron principale, le procédé comportant l'étape consistant à
- agencer une première superposition de fibres de renfort au niveau du bord d'attaque, dans lequel la première superposition de fibres de renfort a une première extension comprenant une première extension primaire (E_{1,1})sur un premier côté de la corde, **caractérisé en ce que** la première extension primaire représente au moins 70 % de la première extension.

14. Procédé selon la revendication 13, dans lequel le procédé comporte l'étape consistant à agencer une deuxième superposition de fibres de renfort au niveau du bord de fuite, dans lequel la deuxième superposition de fibres de renfort a une deuxième extension comprenant une deuxième extension primaire sur un deuxième côté de la corde, dans lequel la deuxième extension primaire représente au moins 60 % de la deuxième extension.

15. Procédé selon l'une quelconque des revendications 13 et 14, dans lequel le procédé comporte l'étape consistant à fournir de la résine à la première et/ou deuxième superposition de fibres de renfort et l'étape consistant à faire durcir la résine pour former une première partie formant coque de pale et/ou une deuxième partie formant coque de pale.

16. Procédé selon l'une quelconque des revendications 13 à 15, dans lequel le procédé comporte l'étape consistant à relier les première et deuxième parties formant coque de pale de la pale d'éolienne.
